# EUROPÄISCHE PATENTSCHRIFT

(11) **EP 3 364 548 B1**
(45) Veröffentlichungstag und Bekanntmachung des Hinweises auf die Patenterteilung: **31.03.2021**
(21) Anmeldenummer: 17157147.4
(22) Anmeldetag: 21.02.2017
(51) Int. Cl.: H04B 3/54

(54) **VERFAHREN UND SYSTEM ZUR DATENÜBERTRAGUNG ÜBER EINE HOCH- ODER MITTELSPANNUNGSLEITUNG**
METHOD AND SYSTEM FOR DATA TRANSMISSION OVER A HIGH OR MEDIUM VOLTAGE LINE
PROCÉDÉ ET SYSTÈME POUR LA TRANSMISSION DE DONNÉES SUR UNE LIGNE DE MOYEN TENSION OU HAUTE TENSION

(43) Veröffentlichungstag der Anmeldung: 22.08.2018
(73) Patentinhaber: Siemens Aktiengesellschaft, 80333 München (DE)
(72) Erfinder: Kussyk, Jaroslaw, 1170 Wien (AT)

(56) Entgegenhaltungen:
- US-A1- 2013 171 999
- US-A1- 2014 169 186

## Beschreibung

Die Erfindung betrifft ein Verfahren zur Datenübertragung über eine Hoch- oder Mittelspannungsleitung gemäß dem Oberbegriff des Anspruchs 1 sowie ein entsprechendes System gemäß Anspruch 8.

In einem Kommunikationsnetzwerk mit mehreren Teilstrecken (ein sog. "multihop network"), in dem ein Übertragungsmedium von mehreren Netzwerkstationen gemeinsam genutzt wird - z. B. bei einer Signalübertragung über ein elektrisches Energieversorgungsnetz oder mittels Funkwellen - kann es zu einem sogenannten "Hidden-Station-Problem" kommen. Netzwerkstationen werden in der Nachrichtentechnik auch als Netzwerkknoten bezeichnet. Dieses Problem ergibt sich, wenn ein erster Netzwerkknoten an einen zweiten Netzwerkknoten sendet und dabei ein dritter Netzwerkknoten außer Reichweite des ersten Netzwerkknoten ist, so dass die Übertragung des ersten Netzwercknotens durch den dritten Netzwerkknoten nicht erkannt wird. Der dritte Netzwerkknoten kann dann fälschlicherweise für eine Kommunikation mit einem vierten Netzwerkknoten die gleiche Frequenz wie der erste Netzwerkknoten nutzen und durch diese Mehrfachbelegung den Empfang im zweiten Netzwerkknoten stören. Eine Netzwerkstation besteht im Wesentlichen aus einem Sender, einem Empfänger (beide zusammen werden als Transceiver bezeichnet) und einem Netzwerkcontroller, der über eine Nutzerschnittstelle Nachrichten mit Nutzern der Netzwerkstation und/oder anderen Netzwerkstationen austauscht. Zusätzlich kann der Netzwerkcontroller die empfangenen Nachrichten über den Sender oder die Nutzerschnittstelle an weitere Netzwerkknoten weiterleiten.

In einem Netzwerk mit dynamischer Frequenzkanalnutzung werden die Frequenzkanäle für die Kommunikation zwischen mindestens zwei Netzwerkstationen dynamisch durch die Netzwerkknoten festgelegt. In einem solchen im Allgemeinen räumlich verteilten Kommunikationsnetzwerk kann es zu dem oben genannten Problem kommen, wenn mindestens ein erster, ein zweiter und ein dritter Netzwerkknoten denselben Frequenzkanal für die Signalübertragung verwenden. Bei der Signalübertragung kann es sich um mindestens eine der beiden Übertragungsrichtungen einer Duplexverbindung handeln.

Bei der sog. Trägerfrequenz-Nachrichtenübertragung über Hochspannungsleitungen (TFH) wird üblicherweise eine "frequency division duplex"-Verbindung (FDD) zwischen zwei Netzwerkknoten (TFH-Vorrichtungen bzw. Datenübertragungsvorrichtungen) aufgebaut. Für die FDD-Verbindungen mehrerer Netzwerkknotenpaare werden in der Regel verschiedene Frequenzkanäle verwendet. Allerdings können die gleichen Frequenzkanäle bei ausreichend entfernten TFH-Vorrichtungen/Vorrichtungspaaren zumindest für eine der Senderichtungen wiederverwendet werden. Werden die Entfernung oder ein mögliches Übersprechen zwischen benachbarten Hochspannungsleitungen nicht ausreichend berücksichtigt, kann es in den von zwei Netzwerkknotenpaaren gemeinsam genutzten Frequenzkanälen zum oben genannten Hidden-Station-Problem kommen.

Das Hidden-Station-Problem wurde bisher ausreichend beschrieben (siehe z. B. den Eintrag zum "Hidden node problem" auf Wikipedia). Das Problem kann beispielsweise durch Verwendung von Vielfachzugriffsverfahren mit Abtasten des Trägers und Vermeidung der Kollisionen (CSMA/CA) sowie eines RTS(request to send)/CTS(clear to send)-Mechanismus vermindert, jedoch nicht vollständig vermieden werden. Dies ist in einem Netzwerk, das aus mehreren FDD-Verbindungen besteht, die eine kontinuierliche bidirektionale Signalübertragung erfordern, nicht akzeptabel. In der bisherigen Praxis wurden im Zuge einer Raum-Frequenzplanung den verschiedenen FDD-Verbindungen jeweils verschiedene Frequenzkanäle/Frequenzkanalpaare mit fixer Bandbreite zugeordnet. Die einzelnen Frequenzkanäle werden zumindest für eine der beider Senderichtungen einer weiteren FDD-Verbindung mit einer gewissen räumlichen Reserve vergeben. Dies verursacht eine nicht optimale räumliche Nutzung des zur Verfügung stehenden Frequenzbereichs. Der TFH steht ein relativ schmaler Frequenzbereich von ca. 30kHz bis 500kHz (in manchen Regionen sogar bis 1MHz) zur Verfügung. Auch in der Funktechnik sind die Frequenzressourcen meistens knapp.

Aus dem Dokument US 2013/0171999 A1 ist ein Verfahren zur dynamischen Wiederverwendung von Übertragungskanälen in einem Kommunikationssystem bekannt, bei welchem mehrere Senderstationen auf einen Übertragungskanal bzw. ein Übertragungsmedium zugreifen können. Dabei wird einerseits ein Prioritätssymbol bei zu versendeten Daten mitgesendet, welches eine Dringlichkeit der zu versendenden Daten angibt. Andererseits werden bei einem Datenpaket Steuerinformation (z.B. Dauer einer Übertragung des jeweiligen Datenpakets) mitgesendet, anhand welcher eine weitere Senderstation ihren Zugriffsversuch auf den Übertragungskanal verzögern kann.

Das Dokument US 2014/0169186 A1 beschreibt einen Mechanismus zur adaptiven Wiederverwendung eines Übertragungskanals, wobei in einem lokalen Kommunikationsnetz eine Einheit vorgesehen ist, von welcher eine Leistungsfähigkeit eines Übertragungskanals im lokalen Kommunikationsnetz sowie in einem benachbarten Kommunikationsnetz - insbesondere anhand einer Signalstärke von zwischen Netzknoten übertragenen Signalen - bestimmt werden kann.

Aus der bisher unveröffentlichten europäischen Patentanmeldung Nr. 17157143.3 ist ferner ein Verfahren zur Datenübertragung über eine Hoch- oder Mittelspannungsleitung bekannt, bei dem ein Schutzsignal-Frequenzkanal für die Übertragung eines Schutzsignals reserviert ist, und primäre Frequenzkanäle zur Datenübertagung verwendet werden, wobei der Schutzsignal-Frequenzkanal zusätzlich zur Übertragung von Zusatzdaten genutzt wird. Aus der bisher unveröffentlichten europäischen Patentanmeldung Nr. 17157153.2 ist eine Weiterbildung des Verfahrens zur Vermeidung eines sog. "exposed-station-problems" bekannt.

Ausgehend von bekannten Verfahren zur Datenübertragung über eine Hoch- oder Mittelspannungsleitung stellt sich an die Erfindung die Aufgabe, ein Verfahren anzugeben, mit dem eine vergleichsweise höhere Datenübertragungsrate erreicht werden kann.

Die Erfindung löst diese Aufgabe durch ein Verfahren gemäß Anspruch 1. Dabei wird von einer ersten Datenübertragungsvorrichtung zur Datenübertragung an einen zweite Datenübertragungsvorrichtung ein erster primärer Frequenzkanal verwendet und auf einem ersten sekundären Frequenzkanal eine erste Frequenzkanal-Belegungsinformation übermittelt. Von einer dritten Datenübertragungsvorrichtung wird die erste Frequenzkanal-Belegungsinformation empfangen und die Signalstärke der empfangenen ersten Frequenzkanal-Belegungsinformation ermittelt. Die erste Frequenzkanal-Belegungsinformation und die Signalstärke der empfangenen ersten Frequenzkanal-Belegungsinformation werden an eine vierte Datenübertragungsvorrichtung weitergeleitet, so dass die vierte Datenübertragungsvorrichtung eine Belegung des ersten primären Frequenzkanals erkennt und diesen Frequenzkanal für die eigene Verwendung zur Datenübertragung mit der dritten Datenübertragungsvorrichtung freigibt, wenn die Signalstärke der bei der dritten Datenübertragungsvorrichtung empfangenen Frequenzkanal-Belegungsinformation einen ersten Schwellenwert unterschreitet.

Dabei kann die dritte Datenübertragungsvorrichtung die erste Frequenzkanal-Belegungsinformation auf dem ersten sekundären Frequenzkanal von der ersten Datenübertragungsvorrichtung empfangen. Dies ist ein Vorteil, weil dabei die vierte Datenübertragungsvorrichtung die Information über die Kanalbelegung bei der ersten Datenübertragungsvorrichtung nicht direkt empfangen kann, d.h. die erste Netzwerkstation ist für die vierte Netzwerkstation eine "verborgene (hidden) Netzwerkstation. Durch die Weiterleitung durch die dritte Datenübertragungsvorrichtung wird jedoch sichergestellt, dass die vierte Netzwerkstation keine Störungen des zwischen der ersten und der zweiten Datenübertragungsvorrichtung genutzten primären Kanals verursacht.

Alternativ kann die zweite Datenübertragungsvorrichtung die erste Frequenzkanal-Belegungsinformation auf dem ersten sekundären Frequenzkanal von der ersten Datenübertragungsvorrichtung empfangen und diese an die dritte Datenübertragungsvorrichtung weiterleiten. Dies ist ein Vorteil, weil dabei die vierte Datenübertragungsvorrichtung die Information über die Kanalbelegung bei der ersten Datenübertragungsvorrichtung nicht direkt empfangen kann, d.h. die erste Netzwerkstation ist für die vierte Netzwerk-station eine "verborgene" (hidden) Netzwerkstation. Durch die Weiterleitung mittels der zweiten und der dritten Datenübertragungsvorrichtung wird jedoch sicher gestellt, dass die vierte Netzwerkstation keine Störungen des zwischen der ersten und der zweiten Datenübertragungsvorrichtung genutzten primären Kanals verursacht.

Speziell in der TFH-Technik wurde bisher eine koordinierte dynamische Wiederverwendung der Frequenzkanäle sowie eine Abstimmung des Sende-/Empfangsverhalten zwischen jenen FDD-Verbindungen, die zumindest teilweise dieselben Frequenzkanäle nutzen, nicht eingesetzt.

Hauptvorteil der vorgeschlagenen Methode liegt in der vollständigen Vermeidung des Hidden-Station-Problems. Durch eine Nutzung sekundärer Übertragungskanäle wendet die vorgeschlagene Methode dafür nur einen relativ geringen Anteil der zur Verfügung stehenden Frequenz- und/oder Zeitressourcen auf.

Das Verfahren ermöglicht den Aufbau eines adaptiven zellularen Netzwerks mit einer dynamischen Frequenzkanalnutzung und damit eine bessere Ausnutzung der zur Verfügung stehenden Frequenzressourcen, wodurch ein höherer Datendurchsatz beispielsweise in einem TFH-Gesamtsystem erzielt werden kann. In der derzeit üblichen Praxis ist die Verwendung von sekundären Kanälen nur für die manuellen Fernwartung, Parametrierung und/oder Firmware-Update bekannt.

Das Weiterleiten der Belegungsinformation hat den Vorteil, dass auch eine für eine sendende Datenübertragungsvorrichtung eigentlich aufgrund der räumlichen Entfernung mit entsprechender Signalabschwächung "unsichtbare" bzw. verborgene Station erkannt wird, und eine Störung des Signalempfangs bei der vorgesehenen empfangenden Datenübertragungsvorrichtung vermieden wird. Damit können Übertragungsressourcen (Kanäle) effizient wiederverwendet werden, wenn die Datenübertragungsvorrichtungen ausreichend weit voneinander entfernt angeordnet sind. Dies wird durch einen vorher festgelegten Schwellenwert der Signalstärke überprüft.

Zwar wäre es auch möglich, ein weiteres separates Netzwerk, wie z. B. LAN, WAN, Richtfunk u. Ä. zu verwenden, um die Koordination der Netzwerkknoten im ersten Netzwerk zur Vermeidung des Hidden-Station-Problems zu ermöglichen, dies würde jedoch einen erheblich höheren Aufwand bedeuten als das erfindungsgemäße Verfahren.

In einer bevorzugten Ausführungsform des erfindungsgemäßen Verfahrens werden die sekundären Frequenzkanäle mit einer höheren Sendeleistung als der jeweiligen Sendeleistung der primären Frequenzkanäle betrieben. Dies erhöht die Reichweite und ermöglicht es daher, die Belegungsinformation auch an Knoten außer Reichweite für Signale in den primären Kanälen zu übermitteln.

In einer bevorzugten Ausführungsform des erfindungsgemäßen Verfahrens werden die sekundären Frequenzkanäle mit einem anderen Übertragungsverfahren als die primären Frequenzkanäle betrieben werden, das eine größere Reichweite der Signalübertragung in den sekundären Frequenzkanälen bewirkt. Es ergeben sich sinngemäß die gleichen Vorteile wie bei der vorherigen Ausführungsform.

In einer bevorzugten Ausführungsform des erfindungsgemäßen Verfahrens wird für die sekundären Frequenzkanäle als Datenübertragungsmethode frequency shift keying eingesetzt.

In einer bevorzugten Ausführungsform des erfindungsgemäßen Verfahrens werden als sekundäre Frequenzkanäle jeweils Schutzsignal-Frequenzkanäle verwendet.

In einer bevorzugten Ausführungsform des erfindungsgemäßen Verfahrens werden auf den sekundären Frequenzkanälen Zusatzdaten übertragen, die mindestens eine der folgenden Signalempfangsqualitätsinformationen aufweisen: Empfangspegel, Signal-zu-Rauschen Verhältnis, Bitfehlerrate, Blockfehlerrate, Rauschpegel, Modulations- und/oder Kanalkodierungsart, Meldungsformat, untere/obere Grenzfrequenz eines Frequenzkanals, Mittenfrequenz, Bandbreite, minimale Bandbreite, Vorzugsmittenfrequenz, Frequenzbandkennung, Sende- und/oder Empfangspegel,
Identifikationsnummer des sendenden Netzwerkknotens, Identifikationsnummer des Partnernetzwerkknotens.

In einer bevorzugten Ausführungsform des erfindungsgemäßen Verfahrens wird für die Schutzsignal-Frequenzkanäle als Datenübertragungsmethode frequency shift keying eingesetzt, wobei Signale außerhalb eines vorher festgelegten Frequenzbereichs als ein Schutzsignal und Signale innerhalb des vorher festgelegten Frequenzbereichs als Zusatzdaten verarbeitet werden.

Ausgehend von bekannten Systemen zur Datenübertragung über eine Hoch- oder Mittelspannungsleitung stellt sich an die Erfindung die Aufgabe, ein System anzugeben, mit dem eine vergleichsweise höhere Datenübertragungsrate erreicht werden kann.

Die Erfindung löst diese Aufgabe durch ein System gemäß Anspruch 8. Bevorzugte Ausführungsformen sind in den Ansprüchen 9 bis 14 angegeben. Es ergeben sich für das erfindungsgemäße System und seine Ausführungsformen sinngemäß die gleichen Vorteile wie eingangs für das erfindungsgemäße Verfahren erläutert.

Im Folgenden soll das erfindungsgemäße Verfahren anhand eines Ausführungsbeispiels und einiger Figuren genauer erläutert werden.

Die Figuren zeigen in schematischer Darstellung:
- Figur 1: ein erstes System mit zwei Paaren von Vorrichtungen zur Datenübertragung, und
- Figur 2: ein erstes Beispiel für eine Frequenzkanalbelegung, und
- Figur 3: ein zweites System mit zwei Paaren von Vorrichtungen zur Datenübertragung, und
- Figur 4: ein zweites Beispiel für eine Frequenzkanalbelegung, und
- Figur 5: ein drittes System mit zwei Paaren von Vorrichtungen zur Datenübertragung, und
- Figur 6: ein drittes Beispiel für eine Frequenzkanalbelegung, und
- Figur 7: ein viertes System mit zwei Paaren von Vorrichtungen zur Datenübertragung, und
- Figur 8: ein viertes Beispiel für eine Frequenzkanalbelegung, und
- Figur 9: ein Prinzipschaltbild eines Systems mit zwei Vorrichtungen zur Datenübertragung.

Zur Vermeidung des Hidden-Station-Problems wird ein Verfahren und ein System für eine Koordinierung der Signalübertragung zwischen TFH-Vorrichtungen vorgeschlagen, wobei über primäre Übertragungskanäle und zusätzlich sekundäre Übertragungskanäle Daten übertragen werden.

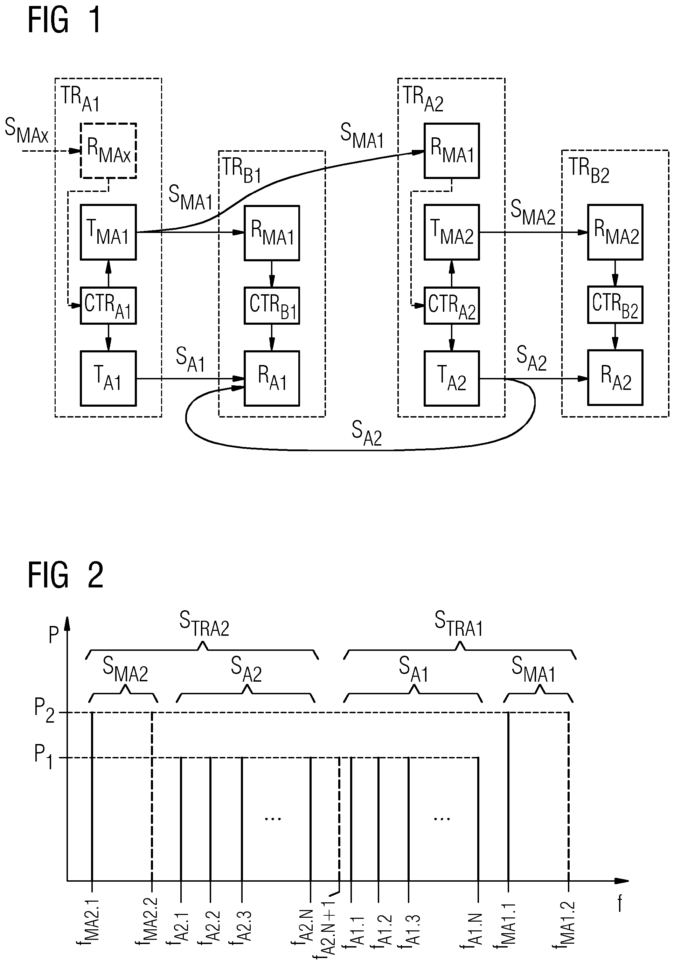

In einer ersten Variante gemäß Figur 1 werden mindestens drei Netzwerkknoten betrachtet: der erste Knoten TRA1, der zweite Knoten TRB1 und der dritte Knoten TRA2. Die Netzwerkknoten TRA1 und TRA2 umfassen Sender TA1 bzw. TA2 für primäre Übertragungskanäle A1 bzw. A2, Sender TMA1 bzw. TMA2 für sekundäre Übertragungskanäle MA1 bzw. MA2, einen optionalen Empfänger RMAx bzw. einen Empfänger RMA1 und Netzwerkknotensteuerungseinrichtungen CTRA1 bzw. CTRA2. Der Netzwerkknoten TRB1 und der optionale vierte Netzwerkknoten TRB2 umfassen Empfänger RA1 bzw. RA2 für primäre Übertragungskanäle A1 bzw. A2, Empfänger RMA1 bzw. RMA2 für sekundäre Übertragungskanäle MA1 bzw. MA2 und Netzwerkknotensteuerungseinrichtungen CTRB1 bzw. CTRB2.

Der Netzwerkknoten TRA1 sendet an seinen Partnernetzwerkknoten TRB1 über den primären Übertragungskanal A1 ein Nutzdatensignal SA1, während TRA2 ein Nutzdatensignal SA2 über den primären Übertragungskanal A2 an den Knoten TRB2 sendet.

Zusätzlich sendet derselbe Netzwerkknoten TRA1 an seinen Partnernetzwerkknoten TRB1 und eventuell an andere Netzwercknoten (insb. TRA2) über einen sekundären Übertragungskanal MA1 das Signal SMA1 aus, das Informationen über die Daten-/Signalübertragung im primären Übertragungskanal A1 und eventuell in weiteren primären Übertragungskanälen (insb. B1, A2, B2) und in weiteren sekundären Übertragungskanälen (insb. MA1, MB1, MA2, MB2 usw.) enthält. Die Informationen im Signal SMA1 sind zumindest für den dritten Netzwerkknoten TRA2 von Interesse.

Die Informationen in Signalen, die über die sekundären Übertragungskanäle (z. B. MA1, MB1, MA2, MB2 u. a.) übertragen werden, umfassen beispielsweise: untere/obere Grenzfrequenz, Mittenfrequenz, Bandbreite, minimale Bandbreite, Vorzugsmittenfrequenz, Frequenzbandkennung, Sende- und/oder Empfangspegel, diverse Empfangsqualitätsparameter (Signal-zu-Rauschen Verhältnis (SNR), Bit- und/oder Blockfehlerrate u. Ä), Rauschpegel, Modulations- und/oder Kanalkodierungsart, Meldungsformat, Identifikationsnummer des sendenden Netzwerkknoten, Identifikationsnummer des Partnernetzwerkknoten, Nutz- und Steuerungsdaten, Zeitstempel u. Ä.

Wenn der Empfänger RMA1 des Netzwerkknotens TRA2 das Signal SMA1 mit Informationen über Daten-/Signalübertragung im primären Übertragungskanal A1 empfängt, erkennt die Netzwerkknotensteuerungseinrichtung CTRA2 die Belegung des primären Übertragungskanals A1 durch den Sender TA1 im TRA1 bzw. Empfänger RA1 im TRB1. Sie weist den Sender TA2 an, den primären Übertragungskanal A1 nicht zu blockieren. Es wird in dem Beispiel angenommen, dass das Signal SA1 vom dem Netzwerkknoten TRA1 den Netzwerkknoten TRA2 unter Umständen nicht erreichen kann, aber das Signal SA2 vom Netzwerkknoten TA2 den Empfänger RA1 des Netzwerkknoten TRB1 stören könnte ("Hidden-Station-Problem"). Somit wird der sekundäre Kanal MA1 für die Vermeidung/Lösung des Problems verwendet, indem dieser Frequenzkanal mit einer höheren Reichweite zur Übermittlung der Belegungsinformation für den Kanal A1 genutzt wird.

Die Besonderheit bei dieser Variante besteht darin, dass das Signal SMA1 im sekundären Kanal MA1 über eine größere Reichweite (bis zum Netzwerkknoten TRA2) übertragen werden kann als das Signal SA1 im primären Kanal A1. Dies kann beispielsweise durch die Verwendung eines robusteren Übertragungsmodus oder durch eine höhere Sendeleistung erzielt werden und soll sicherstellen, dass beispielsweise der Sender TA2 den Empfang des Signals SA1 im RA1 nicht stört falls das Signal SMA1 am RMA1 des TRA2 aufgrund eines großen räumlichen Abstands zwischen TRA1 und TRA1 einen ausreichend niedrigen Pegel erreicht hat, der eine zumindest teilweise Wiederverwendung der Kanalressourcen (Frequenz(subkanäle), Zeit, deren Kombination, CDMA-Code, Senderichtung u. Ä.) des primären Übertragungskanals A1 im Übertragungskanal A2 durch den Netzwerknoten TRA2 ermöglicht. Die Fig. 2 zeigt, dass die Signale SMA1 und SMA2 mit einer höheren Leistung pro Frequenzkanal fMA1.1, fMA1.2, fMA2.1 und fMA2.2 ausgesendet werden.

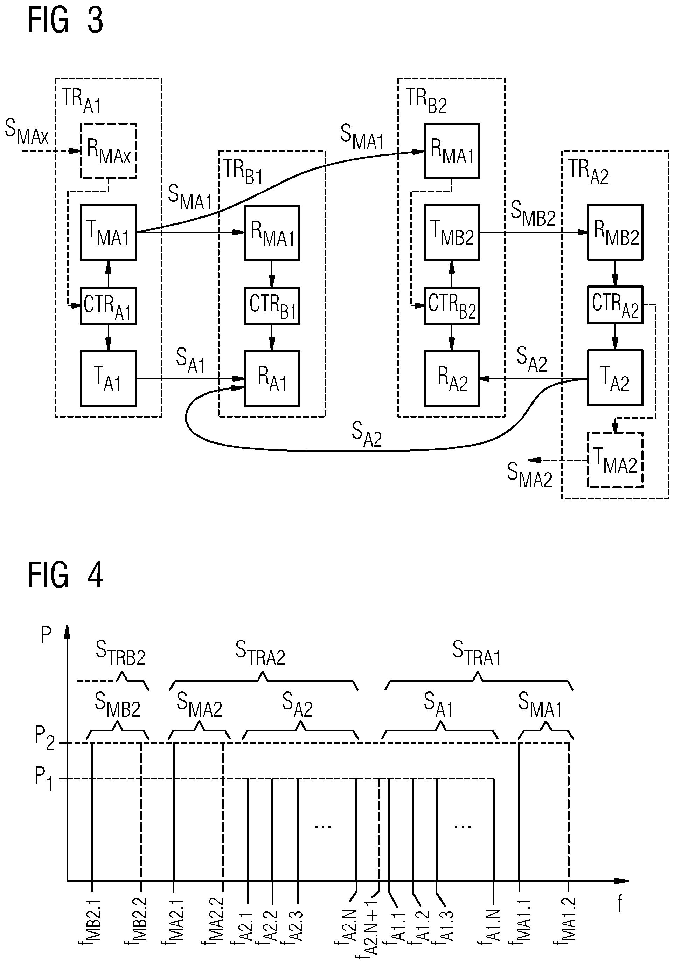

Eine weitere Variante ist in der Fig. 3 dargestellt. Dabei ist eine direkte Übertragung vom Netzwerkknoten TRA1 zum TRA2 nicht möglich. In der Anordnung werden die im Signal SMA1 enthaltenen Informationen aus dem vorigen Ausführungsbeispiel über die Daten-/Signalübertragung im primären Übertragungskanal A1 und eventuell in weiteren primären Übertragungskanälen (insb. B1, A2, B2) und in weiteren sekundären Übertragungskanälen (insb. MA1, MB1, MA2, MB2 usw.), die insbesondere für den weiteren Netzwerkknoten TRA2 von Interesse sind, zunächst vom Netzwerkknoten TRB2 empfangen und dann an seinen Partnernetzwerkknoten TRA2 gesendet. Der Empfänger RMA1 im TRB2 übergibt die empfangenen Informationen an die Netzwerkknotensteuerungseinrichtung CTRB2, die zumindest einen Teil der Informationen aus dem Signal SMA1 (eventuell mit weiteren Informationen über die Daten-/Signalübertragung in anderen Kanälen - insbesondere A1, MA1, B1, MB1, A2, MA2, B2, MB2 u. Ä) mittels des Senders TMB2 bzw. über einen zweiten sekundären Übertragungskanal MB2 an den Netzwerkknoten TRA2 aussendet. Wenn der Empfänger RMB2 des Netzwerkknotens TRA2 das Signal SMB2 mit den vom TRB2 weitergeleiteten Informationen aus dem Signal SMA1 (insbesondere über die Daten-/Signalübertragung im primären Übertragungskanal A1) empfängt, erkennt die Netzwerkknotensteuerungseinrichtung CTRA2 die Belegung des primären Übertragungskanal A1 und weist auch in diesem Fall den Sender TA2 an, den primären Übertragungskanal A1 nicht zu blockieren. Die Fig. 4 zeigt die Frequenzkanäle der primären und sekundären Übertragungskanäle gemäß der Fig. 3.

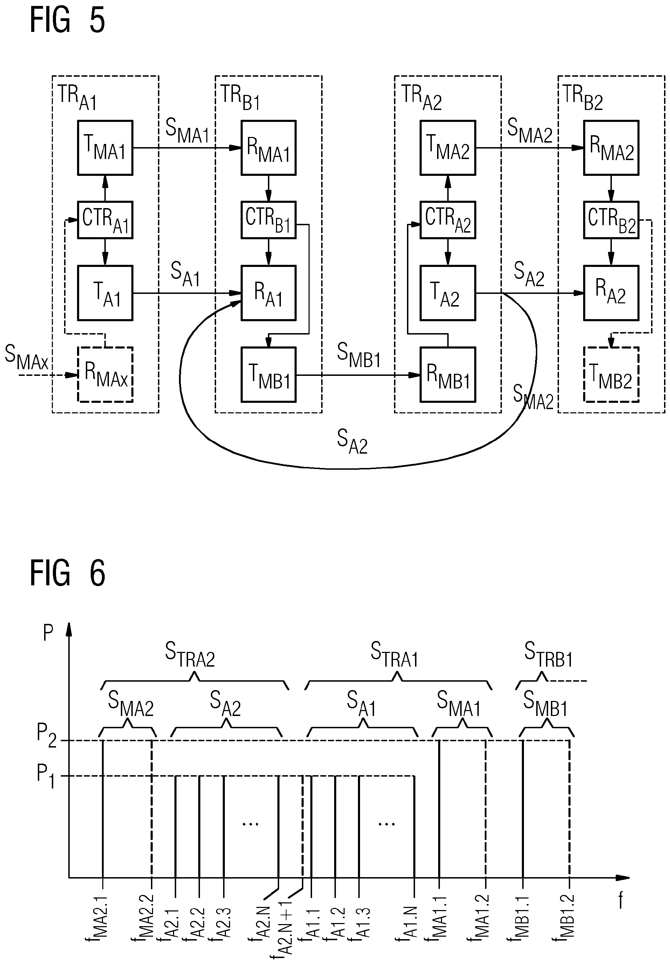

Eine weitere Variante ist in Fig. 5 dargestellt. In der Anordnung werden die im Signal SMA1 enthaltenen Informationen aus den vorigen Ausführungsbeispielen über die Daten-/Signalübertragung im primären Übertragungskanal A1 und eventuell in weiteren primären Übertragungskanälen (insb. B1, A2, B2) und in weiteren sekundären Übertragungskanälen (insb. MA1, MB1, MA2, MB2 usw.), die insbesondere für den weiteren Netzwerkknoten TRA2 von Interesse sind, zunächst vom Netzwerkknoten TRA1 an seinen Partnernetzwerkknoten TRB1 gesendet. Der Empfänger RMA1 übergibt die Informationen an die Netzwerkknotensteuerungseinrichtung CTRB1, die zumindest einen Teil der Informationen aus dem Signal SMA1 und eventuell weitere Informationen über die Daten-/Signalübertragung in anderen Kanälen (insbesondere A1, MA1, B1, MB1, A2, MA2, B2, MB2 u. Ä) mittels des Senders TMB1 bzw. eines zweiten sekundären Übertragungskanals MB1 an den Netzwerkknoten TRA2 aussendet. Wenn der Empfänger RMB1 des Netzwerkknotens TRA2 das Signal SMB1 mit den vom TRB1 weitergeleiteten Informationen aus dem Signal SMA1 (insbesondere über die Daten-/ Signalübertragung im primären Übertragungskanal A1) empfängt, erkennt die Netzwerkknotensteuerungseinrichtung CTRA2 die Belegung des primären Übertragungskanals A1 und weist den Sender TA2 an, den primären Übertragungskanal A1 nicht zu blockieren. Die Fig. 6 zeigt die Frequenzkanäle gemäß Fig. 5. Auch in diesem Beispiel kann wie eingangs erläutert eine erhöhte Sendeleistung für Signale im sekundären Frequenzkanal vorgesehen werden.

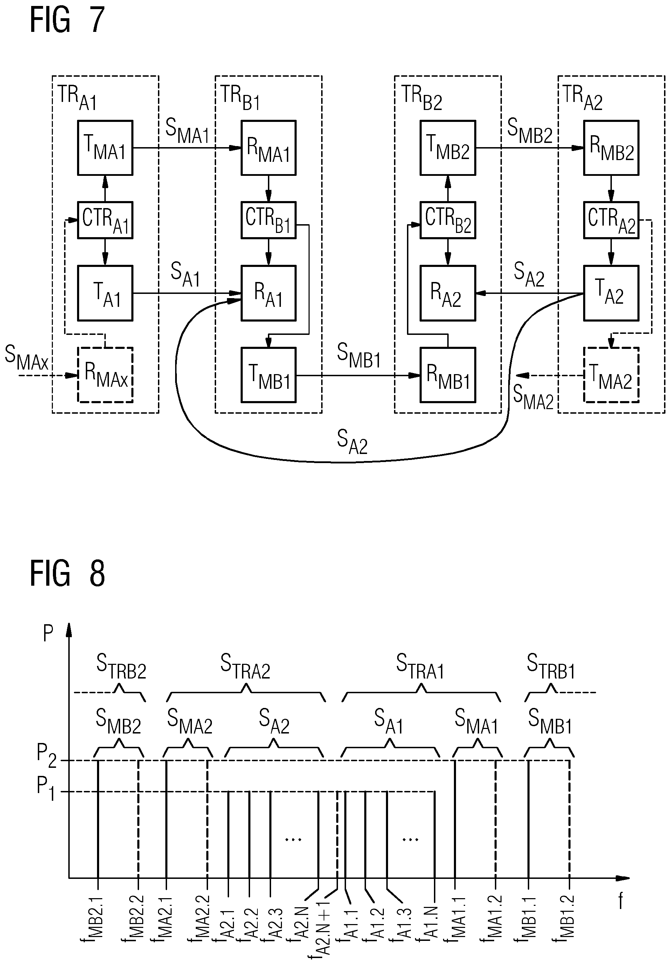

Eine weitere Variante ist in der Fig. 7 dargestellt. In der Anordnung werden die Informationen im Signal SMA1 enthaltenen Informationen aus den vorigen Ausführungsbeispielen über die Daten-/Signalübertragung im primären Übertragungskanal A1 und eventuell in weiteren primären Übertragungskanälen (insb. B1, A2, B2) und in weiteren sekundären Übertragungskanälen (insb. MA1, MB1, MA2, MB2 usw.), die insbesondere für den weiteren Netzwerkknoten TRA2 von Interesse sind, zunächst vom Netzwerkknoten TRA1 an seinen Partnernetzwerkknoten TRB1 gesendet. Der Empfänger RMA1 im TRB1 übergibt die Informationen an das Netzwerkknotensteuerungselement CTRB1, das zumindest ein Teil der Informationen aus dem Signal SMA1 und eventuell mit weiteren Informationen über die Daten-/Signalübertragung in anderen Kanälen (insbesondere A1, MA1, B1, MB1, A2, MA2, B2, MB2 u. Ä) mittels des Senders TMB1 bzw. über einen zweiten sekundären Übertragungskanal MB1 an den weiteren Netzwerkknoten TRB2 aussendet, der ein Partnernetzwerkknoten von TRA2 ist. In dem Ausführungsbeispiel ist keine direkte Übertragung vom Netzwerkknoten TRB1 zum TRA2 möglich. Der Empfänger RMB1 des Netzwerkknotens TRB2 empfängt das Signal SMB1 mit den darin enthaltenen Informationen insbesondere über die Daten-/Signalübertragung im primären Übertragungskanal A1 und übergibt sie an die Netzwerkknotensteuerungseinrichtung CTRB2, die zumindest einen Teil der Informationen aus dem Signal SMA1 und SMB1 und eventuell mit weiteren Informationen über die Daten-/Signalübertragung in anderen Kanälen (insbesondere A1, MA1, B1, MB1, A2, MA2, B2, MB2 u. Ä) mittels des Senders TMB2 bzw. einen zweiten sekundären Übertragungskanal MB2 an den Netzwerkknoten TRA2 aussendet. Wenn der Empfänger RMB2 des Netzwerkknotens TRA2 das Signal SMB2 mit den vom TRB2 weitergeleiteten Informationen über die Daten-/ Signalübertragung im primären Übertragungskanal A1 empfängt, erkennt die Netzwerkknotensteuerungseinrichtung CTRA2 die Belegung des primären Übertragungskanals A1 und weist auch in dem Fall/Ausführungsbeispiel den Sender TA2 den primären Übertragungskanal A1 nicht zu blockieren. Die Fig. 8 zeigt die Frequenzkanäle der primären und sekundären Übertragungskanäle gemäß Fig. 7. Auch in diesem Beispiel kann wie eingangs erläutert eine erhöhte Sendeleistung für Signale im sekundären Frequenzkanal vorgesehen werden.

In den Fig. 2, Fig. 4, Fig. 6 und Fig. 8 ist die potentielle Störung beim Empfang des Nutzdatensignals SA1 durch das Nutzdatensignal SA2 jeweils als gestrichelte Linie im Frequenzkanal fA2.N+1 dargestellt, die beispielsweise bei einer unkoordinierten gleichzeitigen Nutzung der Bandbreite des primären Übertragungskanals A2 in Richtung des primären Übertragungskanals A1 entstehen könnte.

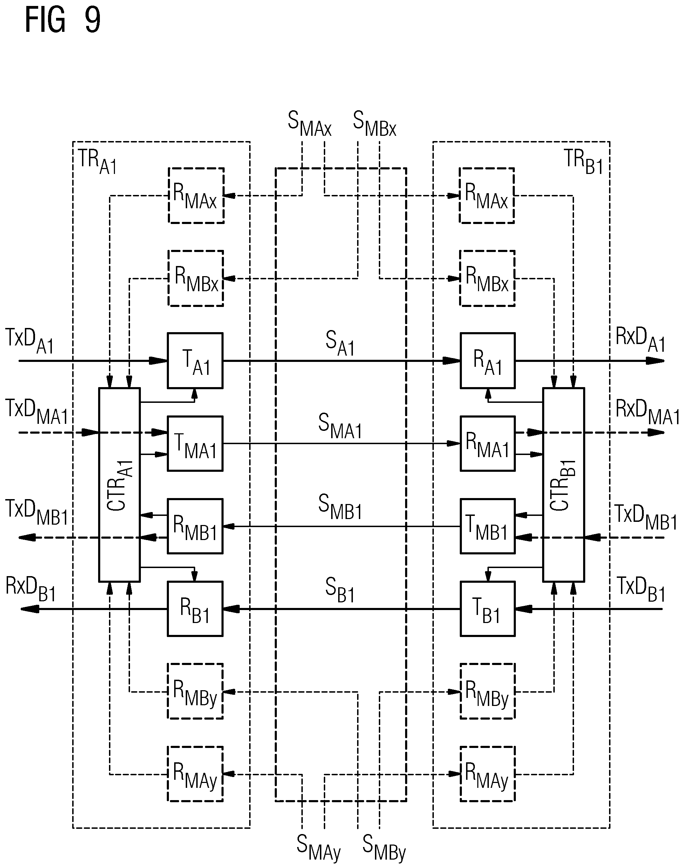

Eine Weiterbildung der Systeme aus den Fig. 1, Fig. 3, Fig. 5 und Fig. 7 ist eine Verwendung für jede Übertragungsrichtung, also eine Duplexübertragung. Fig.9 zeigt eine Anordnung zweier Netzwerkknoten TRA1, TRB1, die eine bidirektionale Übertragung/Empfang von Daten als TxDA1 bzw. RxDB1 und RxDA1 bzw. TxDB1 in einer Duplex-Verbindung über die primären Übertragungskanäle A1 bzw. B1 ermöglichen. Alternativ oder zusätzlich dazu können in der Duplex-Verbindung die Daten und ev. weitere Daten als TxDMA1 bzw. RxDMB1 und RxDMA1 bzw. TxDMB1 über die robusteren sekundären Übertragungskanäle MA1 bzw. MB1 übertragen werden. Die Anordnung umfasst Sender TA1 bzw. TB1, für primäre Übertragungskanäle A1 bzw. B1, Sender TMA1 bzw. TMB1 für sekundäre Übertragungskanäle MA1 bzw. MB1, Empfänger RMB1 bzw. RMA1, Netzwerkknotensteuerungs-einrichtungen CTRA1 bzw. CTRB1 und zumindest einen der mehreren (1 bis n, n ≥ 4) optionalen Empfänger RMAx, RMBx, RMAy und RMBy (weitere mögliche Empfänger für Signale aus weiteren sekundären Übertragungskanälen sind in der Fig.9 nicht dargestellt), die einen Informationsaustausch über die sekundären Übertragungskanäle MAx, MBx, MAy bzw. MBy mit anderen Netzwerknoten ermöglichen. Dies jeweils bezüglich der Daten-/Signalübertragung in jeweiligen primären (Ax, Bx, Ay bzw. By) und ev. in sekundären (MAx, MBx, MAy bzw. MBy) Übertragungskanälen anderer Netzwerkknoten. Eine solche Duplex-Verbindung kann beispielsweise auf Basis eines Vollduplex oder TDD(time division duplex) oder FDD(frequency division duplex) oder CDD (code division duplex) oder deren Kombination realisiert werden.

Dabei können die sekundären Übertragungskanäle beispielsweise als FDM(frequency division multiplex)-Subkanäle oder als Subkanäle eines für mehrere Netzwerkknoten gemeinsamen sekundären TDM(time division multiplex)-oder CDM(code division multiplex)-Übertragungskanals oder deren Kombination ausgebildet sein. Außerdem kann ein sekundärer Übertragungskanal eines Netzwerkknotens mit dem Primärkanal des Netzwerkknotens und/oder dessen Partnerknotens kombiniert werden, wobei jeweils die eingangs genannten Multiplextechniken zum Einsatz kommen.

## Patentansprüche

1. Verfahren zur Datenübertragung über eine Hoch- oder Mittelspannungsleitung, bei dem von einer ersten Datenübertragungsvorrichtung (TRA1) an eine zweite Datenübertragungsvorrichtung (TRB1) zur Datenübertagung ein erster primärer Frequenzkanal (A1) verwendet und auf einem ersten sekundären Frequenzkanal (MA1) eine erste Frequenzkanal-Belegungsinformation (SMA1) übermittelt wird, **dadurch gekennzeichnet, dass**
eine dritte Datenübertragungsvorrichtung (TRA2) die erste Frequenzkanal-Belegungsinformation (SMA1) auf dem ersten sekundären Frequenzkanal (MA1) von der ersten Datenübertragungseinrichtung (TRA1) empfängt, oder dass die zweite Datenübertragungsvorrichtung (TRB1) die erste Frequenzkanal-Belegungsinformation (SMA1) auf dem ersten sekundären Frequenzkanal (MA1) von der ersten Datenübertragungsvorrichtung (TRA1) empfängt und an die dritte Datenübertragungsvorrichtung (TRA2) weiterleitet, dass die dritte Datenübertragungsvorrichtung (TRA2) die Signalstärke der empfangenen ersten Frequenzkanal-Belegungsinformation (SMA1) ermittelt, und die erste Frequenzkanal-Belegungsinformation (SMA1) und die Signalstärke auf einem zweiten sekundären Frequenzkanal (MA2) an eine vierte Datenübertragungsvorrichtung (TRB2) weiterleitet, so dass die vierte Datenübertragungsvorrichtung (TRB2) eine Belegung des ersten primären Frequenzkanals (A1) erkennt und diesen Frequenzkanal (A1) für die eigene Verwendung zur Datenübertragung mit der dritten Datenübertragungsvorrichtung (TRA2) freigibt, wenn die Signalstärke der bei der dritten Datenübertragungsvorrichtung (TRA2) empfangenen Frequenzkanal-Belegungsinformation (SMA1) einen ersten Schwellenwert unterschreitet.

2. Verfahren nach einem der vorhergehenden Ansprüche, **dadurch gekennzeichnet, dass** die sekundären Frequenzkanäle mit einer höheren Sendeleistung als der jeweiligen Sendeleistung der primären Frequenzkanäle betrieben werden.

3. Verfahren nach einem der vorhergehenden Ansprüche, **dadurch gekennzeichnet, dass** die sekundären Frequenzkanäle mit einem anderen Übertragungsverfahren als die primären Frequenzkanäle betrieben werden, das eine größere Reichweite der Signalübertragung in den sekundären Frequenzkanälen bewirkt.

4. Verfahren nach Anspruch 3, **dadurch gekennzeichnet, dass** für die sekundären Frequenzkanäle als Datenübertragungsmethode frequency shift keying eingesetzt wird.

5. Verfahren nach einem der vorhergehenden Ansprüche, **dadurch gekennzeichnet, dass** als sekundäre Frequenzkanäle (MA1, MA2) jeweils Schutzsignal-Frequenzkanäle verwendet werden.

6. Verfahren nach einem der vorhergehenden Ansprüche, **dadurch gekennzeichnet, dass** auf den sekundären Frequenzkanälen (MA1, MA2) Zusatzdaten übertragen werden, die mindestens eine der folgenden Signalempfangsqualitätsinformationen aufweisen: Empfangspegel, Signal-zu-Rauschen Verhältnis, Bitfehlerrate, Blockfehlerrate, Rauschpegel, Modulations- und/oder Kanalkodierungsart, Meldungsformat, untere/obere Grenzfrequenz eines Frequenzkanals, Mittenfrequenz, Bandbreite, minimale Bandbreite, Vorzugsmittenfrequenz, Frequenzbandkennung, Sende- und/oder Empfangspegel, Identifikationsnummer des sendenden Netzwerkknotens, Identifikationsnummer des Partnernetzwerkknotens.

7. Verfahren nach einem der Ansprüche 5 bis 6, **dadurch gekennzeichnet, dass** für die Schutzsignal-Frequenzkanäle als Datenübertragungsmethode frequency shift keying eingesetzt wird, wobei Signale außerhalb eines vorher festgelegten Frequenzbereichs als ein Schutzsignal und Signale innerhalb des vorher festgelegten Frequenzbereichs als Zusatzdaten verarbeitet werden.

8. System zur Datenübertragung über eine Hoch- oder Mittelspannungsleitung mit mehreren Datenübertragungsvorrichtungen, die ausgebildet sind, von einer ersten Datenübertragungsvorrichtung (TRA1) an eine zweite Datenübertragungsvorrichtung (TRB1) zur Datenübertagung einen ersten primären Frequenzkanal (A1) zu verwenden und auf einem ersten sekundären Frequenzkanal (MA1) eine erste Frequenzkanal-Belegungsinformation (SMA1) zu übermitteln, **dadurch gekennzeichnet, dass** eine dritte Datenübertragungsvorrichtung (TRA2) ausgebildet ist, die erste Frequenzkanal-Belegungsinformation (SMA1) zu empfangen und die Signalstärke der empfangenen ersten Frequenzkanal-Belegungsinformation (SMA1) zu ermitteln, und die erste Frequenzkanal-Belegungsinformation (SMA1) und die Signalstärke auf einem zweiten sekundären Frequenzkanal (MA2) an eine vierte Datenübertragungsvorrichtung (TRB2) weiterzuleiten, wobei die dritte Datenübertragungsvorrichtung (TRA2) weiterhin dazu ausgebildet ist, die erste Frequenzkanal-Belegungsinformation (SMA1) auf dem ersten sekundären Frequenzkanal (MA1) von der ersten Datenübertragungsvorrichtung (TRA1) zu empfangen oder die zweite Datenübertragungsvorrichtung (TRB1) dazu ausgebildet ist, die erste Frequenzkanal-Belegungsinformation (SMA1) auf dem ersten sekundären Frequenzkanal (MA1) von der ersten Datenübertragungsvorrichtung (TRA1) zu empfangen und an die dritte Datenübertragungsvorrichtung (TRA2) weiterzuleiten, und dass die vierte Datenübertragungsvorrichtung (TRB2) ausgebildet ist, eine Belegung des ersten primären Frequenzkanals (A1) zu erkennen und diesen Frequenzkanal (A1) für die eigene Verwendung zur Datenübertragung mit der dritten Datenübertragungsvorrichtung (TRA2) freizugeben, wenn die Signalstärke der bei der dritten Datenübertragungsvorrichtung empfangenen Frequenzkanal-Belegungsinformation (SMA1) einen ersten Schwellenwert unterschreitet.

9. System nach Anspruch 8, **dadurch gekennzeichnet, dass** die Datenübertragungsvorrichtungen ausgebildet sind, die sekundären Frequenzkanäle mit einer höheren Sendeleistung als der jeweiligen Sendeamplitude der primären Frequenzkanäle zu betreiben.

10. System nach einem der Ansprüche 8 bis 9, **dadurch gekennzeichnet, dass** die Datenübertragungsvorrichtungen ausgebildet sind, die sekundären Frequenzkanäle mit einem anderen Übertragungsverfahren als die primären Frequenzkanäle zu betreiben, das eine größere Reichweite der Signalübertragung im sekundären Frequenzkanal bewirkt.

11. System nach Anspruch 10, **dadurch gekennzeichnet, dass** die Datenübertragungsvorrichtungen ausgebildet sind, für die sekundären Frequenzkanäle als Datenübertragungsmethode frequency shift keying einzusetzen.

12. System nach einem der Ansprüche 8 bis 11, **dadurch gekennzeichnet, dass** die Datenübertragungsvorrichtungen ausgebildet sind, als sekundäre Frequenzkanäle (MB1) jeweils einen Schutzsignal-Frequenzkanal zu verwenden.

13. System nach einem der Ansprüche 8 bis 12, **dadurch gekennzeichnet, dass** die Datenübertragungsvorrichtungen ausgebildet sind, auf den sekundären Frequenzkanälen (MB1) Zusatzdaten zu übertragen, die mindestens eine der folgenden Signalempfangsqualitätsinformationen aufweisen: Empfangspegel, Signal-zu-Rauschen Verhältnis, Bitfehlerrate, Blockfehlerrate, Rauschpegel, Modulations- und/oder Kanalkodierungsart, Meldungsformat, untere/obere Grenzfrequenz eines Frequenzkanals, Mittenfrequenz, Bandbreite, minimale Bandbreite, Vorzugsmittenfrequenz, Frequenzbandkennung, Sende- und/oder Empfangspegel, Identifikationsnummer des sendenden Netzwerkknotens, Identifikationsnummer des Partnernetzwerkknotens.

14. System nach einem der Ansprüche 12 bis 13, **dadurch gekennzeichnet, dass** die Datenübertragungsvorrichtungen ausgebildet sind, für die Schutzsignal-Frequenzkanäle als Datenübertragungsmethode frequency shift keying einzusetzen, wobei Signale außerhalb eines vorher festgelegten Frequenzbereichs als ein Schutzsignal und Signale innerhalb des vorher festgelegten Frequenzbereichs als Zusatzdaten verarbeitet werden.

## Claims

1. Method for transmitting data via a high-voltage line or a medium-voltage line, in which method a first primary frequency channel (A1) is used to transmit data from a first data transmission device (TRA1) to a second data transmission device (TRB1) and first frequency channel allocation information (SMA1) is transmitted on a first secondary frequency channel (MA1), **characterized in that**
a third data transmission device (TRA2) receives the first frequency channel allocation information (SMA1) on the first secondary frequency channel (MA1) from the first data transmission device (TRA1), or **in that** the second data transmission device (TRB1) receives the first frequency channel allocation information (SMA1) on the first secondary frequency channel (MA1) from the first data transmission device (TRA1) and forwards it to the third data transmission device (TRA2), **in that** the third data transmission device (TRA2) determines the signal strength of the first frequency channel allocation information (SMA1) received, and forwards the first frequency channel allocation information (SMA1) and the signal strength to a fourth data transmission device (TRB2) on a second secondary frequency channel (MA2) such that the fourth data transmission device (TRB2) recognizes allocation of the first primary frequency channel (A1) and releases said frequency channel (A1) for its own use to transmit data using the third data transmission device (TRA2) if the signal strength of the frequency channel allocation information (SMA1) received at the third data transmission device (TRA2) falls below a first threshold value.

2. Method according to the preceding claim, **characterized in that** the secondary frequency channels are operated with a transmission power higher than the respective transmission power of the primary frequency channels.

3. Method according to either of the preceding claims, **characterized in that** the secondary frequency channels are operated using a transmission method different from that for the primary frequency channels, which transmission method brings about a greater signal transmission range in the secondary frequency channels.

4. Method according to Claim 3, **characterized in that** frequency shift keying is used as the data transmission method for the secondary frequency channels.

5. Method according to one of the preceding claims, **characterized in that** protection signal frequency channels are used in each case as secondary frequency channels (MA1, MA2).

6. Method according to one of the preceding claims, **characterized in that** additional data are transmitted on the secondary frequency channels (MA1, MA2), which additional data include at least one of the following items of signal reception quality information: reception level, signal-to-noise ratio, bit error rate, block error rate, noise level, type of modulation and/or type of channel coding, message format, lower/upper cut-off frequency of a frequency channel, centre frequency, bandwidth, minimum bandwidth, preferred centre frequency, frequency band identifier, transmission and/or reception level, identification number of the transmitting network node, identification number of the partner network node.

7. Method according to either of Claims 5 and 6, **characterized in that** frequency shift keying is used as the data transmission method for the protection signal frequency channels, wherein signals outside of a predetermined frequency range are processed as a protection signal and signals within the predetermined frequency range are processed as additional data.

8. System for transmitting data via a high-voltage line or a medium-voltage line, having a plurality of data transmission devices that are designed to use a first primary frequency channel (A1) to transmit data from a first data transmission device (TRA1) to a second data transmission device (TRB1) and to transmit first frequency channel allocation information (SMA1) on a first secondary frequency channel (MA1), **characterized in that** a third data transmission device (TRA2) is designed to receive the first frequency channel allocation information (SMA1) and to determine the signal strength of the first frequency channel allocation information (SMA1) received, and to forward the first frequency channel allocation information (SMA1) and the signal strength to a fourth data transmission device (TRB2) on a second secondary frequency channel (MA2), wherein the third data transmission device (TRA2) is furthermore designed to receive the first frequency channel allocation information (SMA1) on the first secondary frequency channel (MA1) from the first data transmission device (TRA1) or the second data transmission device (TRB1) is designed to receive the first frequency channel allocation information (SMA1) on the first secondary frequency channel (MA1) from the first data transmission device (TRA1) and to forward it to the third data transmission device (TRA2), and **in that** the fourth data transmission device (TRB2) is designed to recognize allocation of the first primary frequency channel (A1) and to release said frequency channel (A1) for its own use to transmit data using the third data transmission device (TRA2) if the signal strength of the frequency channel allocation information (SMA1) received at the third data transmission device falls below a first threshold value.

9. System according to Claim 8, **characterized in that** the data transmission devices are designed to operate the secondary frequency channels with a transmission power higher than the respective transmission amplitude of the primary frequency channels.

10. System according to either of Claims 8 and 9, **characterized in that** the data transmission devices are designed to operate the secondary frequency channels using a transmission method different from that for the primary frequency channels, which transmission method brings about a greater signal transmission range in the secondary frequency channel.

11. System according to Claim 10, **characterized in that** the data transmission devices are designed to use frequency shift keying as the data transmission method for the secondary frequency channels.

12. System according to one of Claims 8 to 11, **characterized in that** the data transmission devices are designed to use a protection signal frequency channel in each case as secondary frequency channels (MB1).

13. System according to one of Claims 8 to 12, **characterized in that** the data transmission devices are designed to transmit additional data on the secondary frequency channels (MB1), which additional data include at least one of the following items of signal reception quality information: reception level, signal-to-noise ratio, bit error rate, block error rate, noise level, type of modulation and/or type of channel coding, message format, lower/upper cut-off frequency of a frequency channel, centre frequency, bandwidth, minimum bandwidth, preferred centre frequency, frequency band identifier, transmission and/or reception level, identification number of the transmitting network node, identification number of the partner network node.

14. System according to either of Claims 12 and 13, **characterized in that** the data transmission devices are designed to use frequency shift keying as the data transmission method for the protection signal frequency channels, wherein signals outside of a predetermined frequency range are processed as a protection signal and signals within the predetermined frequency range are processed as additional data.

## Revendications

1. Procédé pour la transmission de données sur une ligne haute ou moyenne tension, dans lequel un premier canal de fréquence primaire (A1) est utilisé pour la transmission de données d'un premier dispositif de transmission de données (TRA1) vers un deuxième dispositif de transmission de données (TRB1) et une première information d'occupation de canal de fréquence (SMA1) est transmise sur un premier canal de fréquence secondaire (MA1), **caractérisé en ce qu'**un troisième dispositif de transmission de données (TRA2) reçoit la première information d'occupation de canal de fréquence (SMA1) du premier dispositif de transmission de données (TRA1) sur le premier canal de fréquence secondaire (MA1), ou **en ce que** le deuxième dispositif de transmission de données (TRB1) reçoit la première information d'occupation de canal de fréquence (SMA1) du premier dispositif de transmission de données (TRA1) sur le premier canal de fréquence secondaire (MA1) et la retransmet au troisième dispositif de transmission de données (TRA2), **en ce que** le troisième dispositif de transmission de données (TRA2) détermine l'intensité de signal de la première information d'occupation de canal de fréquence reçue (SMA1) et retransmet la première information d'occupation de canal de fréquence (SMA1) et l'intensité de signal sur un deuxième canal de fréquence secondaire (MA2) à un quatrième dispositif de transmission de données (TRB2), de sorte que le quatrième dispositif de transmission de données (TRB2) reconnaît une occupation du premier canal de fréquence primaire (A1) et libère ce canal de fréquence (A1) pour sa propre utilisation aux fins de la transmission de données au moyen du troisième dispositif de transmission de données (TRA2) lorsque l'intensité de signal de l'information d'occupation de canal de fréquence (SMA1) reçue au niveau du troisième dispositif de transmission de données (TRA2) tombe en dessous d'une première valeur seuil.

2. Procédé selon l'une des revendications précédentes, **caractérisé en ce que** les canaux de fréquence secondaires sont exploités avec une puissance d'émission supérieure à la puissance d'émission respective des canaux de fréquence primaires.

3. Procédé selon l'une des revendications précédentes, **caractérisé en ce que** les canaux de fréquence secondaires sont exploités avec un autre procédé de transmission que les canaux de fréquence primaires, lequel entraîne une plus grande portée de la transmission de signal dans les canaux de fréquence secondaires.

4. Procédé selon la revendication 3, **caractérisé en ce qu'**est utilisé en tant que méthode de transmission de données, pour les canaux de fréquence secondaires, le frequency shift keying.

5. Procédé selon l'une des revendications précédentes, **caractérisé en ce que** sont respectivement utilisés, en tant que canaux de fréquence secondaires (MA1, MA2) des canaux de fréquence de signal de protection.

6. Procédé selon l'une des revendications précédentes, **caractérisé en ce que** sont transmises, sur les canaux de fréquence secondaires (MA1, MA2), des données supplémentaires qui comportent au moins une des informations de qualité de réception de signal suivantes : niveau de réception, rapport signal-bruit, taux d'erreur sur les bits, taux d'erreur sur les blocs, niveau de bruit, type de modulation et/ou de codage de canal, format de message, fréquence limite inférieure/supérieure d'un canal de fréquence, fréquence centrale, largeur de bande, largeur de bande minimale, fréquence centrale préférentielle, identifiant de bande de fréquence, niveau d'émission et/ou de réception, numéro d'identification du nœud de réseau émetteur, numéro d'identification du nœud de réseau partenaire.

7. Procédé selon l'une des revendications 5 à 6, **caractérisé en ce que** le frequency shift keying est utilisé en tant que méthode de transmission de données pour les canaux de fréquence de signal de protection, des signaux en dehors d'une plage de fréquence déterminée préalablement étant traités en tant que signal de protection et des signaux à l'intérieur de la plage de fréquence déterminée préalablement, en tant que données supplémentaires.

8. Système de transmission de données sur une ligne haute ou moyenne tension comportant plusieurs dispositifs de transmission de données qui sont conçus pour utiliser un premier canal de fréquence primaire (A1) pour la transmission de données d'un premier dispositif de transmission de données (TRA1) vers un deuxième dispositif de transmission de données (TRB1) et pour transmettre une première information d'occupation de canal de fréquence (SMA1) sur un premier canal de fréquence secondaire (MA1), **caractérisé en ce qu'**un troisième dispositif de transmission de données (TRA2) est conçu pour recevoir la première information d'occupation de canal de fréquence (SMA1) et pour déterminer l'intensité de signal de la première information d'occupation de canal de fréquence reçue (SMA1), et pour retransmettre la première information d'occupation de canal de fréquence (SMA1) et l'intensité de signal sur un deuxième canal de fréquence secondaire (MA2) à un quatrième dispositif de transmission de données (TRB2), le troisième dispositif de transmission de données (TRA2) étant en outre conçu pour recevoir du premier dispositif de transmission de données (TRA1) la première information d'occupation de canal de fréquence (SMA1) sur le premier canal de fréquence secondaire (MA1) ou le deuxième dispositif de transmission de données (TRB1) étant conçu pour recevoir du premier dispositif de transmission de données (TRA1) la première information d'occupation de canal de fréquence (SMA1) sur le premier canal de fréquence secondaire (MA1) et la retransmettre au troisième dispositif de transmission de données (TRA2), et **en ce que** le quatrième dispositif de transmission de données (TRB2) est conçu pour reconnaître une occupation du premier canal de fréquence primaire (A1) et pour libérer ce canal de fréquence (A1) pour sa propre utilisation aux fins de la transmission de données au moyen du troisième dispositif de transmission de données (TRA2) lorsque l'intensité de signal de l'information d'occupation de canal de fréquence (SMA1) reçue au niveau du troisième dispositif de transmission de données tombe en dessous d'une première valeur seuil.

9. Système selon la revendication 8, **caractérisé en ce que** les dispositifs de transmission de données sont conçus pour exploiter les canaux de fréquence secondaires avec une puissance d'émission supérieure à l'amplitude d'émission respective des canaux de fréquence primaires.

10. Système selon l'une des revendications 8 à 9, **caractérisé en ce que** les dispositifs de transmission de données sont conçus pour exploiter les canaux de fréquence secondaires avec un autre procédé de transmission que les canaux de fréquence primaires, lequel entraîne une plus grande portée de la transmission de signal dans le canal de fréquence secondaire.

11. Système selon la revendication 10, **caractérisé en ce que** les dispositifs de transmission de données sont conçus pour utiliser le frequency shift keying en tant que méthode de transmission de données pour les canaux de fréquence secondaires.

12. Système selon l'une des revendications 8 à 11, **caractérisé en ce que** les dispositifs de transmission de données sont conçus pour utiliser, en tant que canaux de fréquence secondaires (MB1), respectivement un canal de fréquence de signal de protection.

13. System selon l'une des revendications 8 à 12, **caractérisé en ce que** les dispositifs de transmission de données sont conçus pour transmettre sur les canaux de fréquence secondaires (MB1) des données supplémentaires qui comportent au moins une des informations de qualité de réception de signal suivantes : niveau de réception, rapport signal-bruit, taux d'erreur sur les bits, taux d'erreur sur les blocs, niveau de bruit, type de modulation et/ou de codage de canal, format de message, fréquence limite inférieure/supérieure d'un canal de fréquence, fréquence centrale, largeur de bande, largeur de bande minimale, fréquence centrale préférentielle, identifiant de bande de fréquence, niveau d'émission et/ou de réception, numéro d'identification du nœud de réseau émetteur, numéro d'identification du nœud de réseau partenaire.

14. Système selon l'une des revendications 12 à 13, **caractérisé en ce que** les dispositifs de transmission de données sont conçus pour utiliser le frequency shift keying en tant que méthode de transmission de données pour les canaux de fréquence de signal de protection, des signaux en dehors d'une plage de fréquence déterminée préalablement étant traités en tant que signal de protection et des signaux à l'intérieur de la plage de fréquence déterminée préalablement, en tant que données supplémentaires.
